# EUROPÄISCHE PATENTSCHRIFT

(11) **EP 3 360 122 B1**
(45) Veröffentlichungstag und Bekanntmachung des Hinweises auf die Patenterteilung: **18.09.2019**
(21) Anmeldenummer: 16787889.1
(22) Anmeldetag: 28.10.2016
(51) Int. Cl.: G08G 1/14, B60L 1/00, G07B 15/02

(54) **VERFAHREN ZUR ERFASSUNG VON GEPARKTEN FAHRZEUGEN UND ZUR ABRECHNUNG VON PARKGEBÜHREN**
METHOD FOR DETECTING PARKED VEHICLES AND FOR COLLECTING PARKING FEES
PROCÉDÉ DE DÉTECTION DES VÉHICULES EN STATIONNEMENT ET DE RÈGLEMENT DU TARIF DE STATIONNEMENT

(30) Priorität: 30.10.2015 DE 102015118598
(43) Veröffentlichungstag der Anmeldung: 15.08.2018
(73) Patentinhaber: Cleverciti Systems GmbH, 81379 München (DE)
(72) Erfinder: HOHENACKER, Thomas, 82319 Starnberg (DE)
(74) Vertreter: Manitz Finsterwald Patent- und Rechtsanwaltspartnerschaft mbB
(86) Internationale Anmeldenummer: PCT/EP2016/076051
(87) Internationale Veröffentlichungsnummer: WO 2017/072286

(56) Entgegenhaltungen:
- EP-A2- 2 138 653
- DE-A1-102007 022 461
- KR-A- 20130 015 649
- US-A1- 2008 258 934
- US-A1- 2012 098 677

## Beschreibung

Die vorliegende Erfindung betrifft ein Verfahren zur Erfassung von geparkten Fahrzeugen und zur Abrechnung von Parkgebühren.

In heutigen Städten werden Parkgebühren beispielsweise dazu verwendet, die Parkdauern von Fahrzeugen in bestimmten Bereichen mit Gebühren zu belegen und auf diese Weise Einfluss auf die Parkdauer zu nehmen. Zudem sind Parkgebühren eine wichtige öffentliche Einnahmequelle, wobei aus den Parkgebühren beispielsweise Verbesserungen der Infrastruktur bezahlt werden.

Üblicherweise werden Parkautomaten oder Parkuhren aufgestellt, in die ein Fahrer des Fahrzeugs Geld einwerfen muss, um eine bestimmte Zeit auf einem bestimmten Parkplatz zu parken. Ein solches Bezahlen am Automaten oder an der Parkuhr empfinden viele Fahrer als umständlich und beschwerlich. Zudem muss hierbei manuell, d.h. beispielsweise durch Politessen, überprüft werden, ob die Parkgebühren ordnungsgemäß bezahlt werden. Eine solche Überprüfung ist aufwändig und kostenintensiv, weshalb oftmals auf eine flächendeckende Überwachung der Bezahlung von Parkgebühren verzichtet wird. Dies wiederum führt dazu, dass die Parkgebühren häufig nicht bezahlt werden, wodurch Städten bzw. öffentlichen Einrichtungen hohe finanzielle Verluste entstehen können. Es kann davon ausgegangen werden, dass teilweise zwischen 50% und 90% der Parkgebühren nicht bezahlt werden.

Aus der KR 2013 0015649 A ist ein Verfahren zum Parkplatzmanagement bekannt, welches mittels Triangulation aus den Verbindungsdaten zwischen an einem Fahrzeug angebrachten Transpondern und einem oder mehreren ortsfesten Lesegeräten die Position des Fahrzeugs ermittelt und einen Fahrer zu freien Parkplätzen leitet. Der Belegungszustand der Parkplätze wird mittels an den Parkplätzen angebrachten Detektoren bestimmt und zusammen mit weiteren Informationen wie Position und Fahrtrichtung des Fahrzeugs an den Fahrer übermittelt.

Es ist die der Erfindung zugrunde liegende Aufgabe, ein Verfahren zur Erfassung von geparkten Fahrzeugen und zur Abrechnung von Parkgebühren anzugeben, welches den Aufwand zur Bezahlung der Parkgebühren minimiert und zugleich die Bezahlung der Parkgebühren sicherstellt.

Gemäß dem Verfahren der Erfindung
- werden Parkplatzbereiche in einer Parkplatzfläche erkannt und/oder festgelegt,
- wird in einem Fahrzeug ein Transponder angeordnet,
- sendet der Transponder automatisch wiederholt ein Erkennungssignal aus,
- wird das Erkennungssignal von drei ortsfest beabstandet zueinander angeordneten Funkeinrichtungen empfangen,
- wird mittels einer Steuereinrichtung anhand des Erkennungssignals eine Position des Fahrzeugs berechnet und eine Identifikation des Transponders ermittelt,
   - wird mittels eines Überwachungssystems die Parkplatzfläche zumindest bereichsweise erfasst, wobei mittels einer Erkennungseinheit freie und besetzte Parkplatzbereiche erkannt werden,
- wird festgestellt, ob sich das Fahrzeug in einem der Parkplatzbereiche befindet,
- wird anhand des Erkennungssignals ermittelt, ob das Fahrzeug parkt,
- wird, sofern das Fahrzeug in einem der Parkplatzbereiche parkt, wird anhand des Überwachungssystems überprüft, ob ein mittels des Erkennungssignals als parkend identifiziertes Fahrzeug tatsächlich auf dem ermittelten Parkplatzbereich parkt, wobei die Identifikation des Transponders und der von dem Fahrzeug verwendete Parkplatzbereich nur im Fall einer korrekten Ermittlung des parkenden Fahrzeugs an einen Registrierungsserver übermittelt werden, wobei der Registrierungsserver anhand eines Tarifs für den verwendeten Parkplatzbereich eine Parkplatzgebühr ermittelt und wobei der Registrierungsserver, falls erforderlich, einen Bezahlvorgang einleitet.

Es wird ein Transponder in einem Fahrzeug vorgesehen, dessen Position mittels des Erkennungssignals festgestellt wird. Unter einem Erkennungssignal können dabei auch mehrere zeitlich beabstandete Signale verstanden werden, die beispielsweise periodisch von dem Transponder ausgesandt werden.

Erfindungsgemäß wird mittels eines Überwachungssystems die Parkplatzfläche zumindest bereichsweise, bevorzugt optisch, mittels Ultraschall, mittels Radar und/oder mittels Bodensensoren, erfasst, wobei mittels einer Erkennungseinheit freie und besetzte Parkplatzbereiche, insbesondere mittels Bildverarbeitung, bevorzugt anhand von Einzelbildern, erkannt werden. Das Überwachungssystem kann ein Kamerasystem mit einer oder mehreren Kameras umfassen, die die Parkplatzfläche erfassen, wodurch die Verwendung von Bildverarbeitungsalgorithmen ermöglicht werden kann. Alternativ oder zusätzlich kann das Überwachungssystem auch Ultraschallsensoren, Radarsensoren und/oder Bodensensoren umfassen. Die zusätzliche Verwendung eines Überwachungssystems ist insbesondere dann sinnvoll, wenn nicht in jedem Fahrzeug ein Transponder vorhanden ist. Das Überwachungssystem schafft dann die Möglichkeit, unabhängig von vorhandenen Transpondern, freie und besetzte Parkplatzbereiche zu erkennen. Zudem ergibt sich beispielsweise die Möglichkeit, einen anhand des Erkennungssignals erkannten Parkvorgang optisch mittels des Überwachungssystems zu verifizieren.

Insbesondere wird also anhand des Überwachungssystems überprüft, ob ein mittels des Erkennungssignals als parkend identifiziertes Fahrzeug tatsächlich auf dem ermittelten Parkplatzbereich parkt, wobei die Identifikation des Transponders und der von dem Fahrzeug verwendete Parkplatzbereich nur im Fall einer korrekten Ermittlung des Parkvorgangs an einen Registrierungsserver übermittelt werden.

Das Überwachungssystem kann ausgebildet sein, festzustellen, ob ein Fahrzeug auf einem bestimmten Parkplatzbereich parkt. Anhand des Überwachungssystems kann aber z.B. nicht das Fahrzeug an sich oder ein Nummernschild des Fahrzeugs erkannt werden.

Nachdem festgestellt wurde, dass das Fahrzeug, in welchem der Transponder angeordnet ist, auf einem der Parkplatzbereiche parkt, wird somit eine Identifikation des Transponders an den Registrierungsserver übertragen, woraufhin der Registrierungsserver den Bezahlvorgang einleiten kann.

Die Erfindung macht sich die Erkenntnis zunutze, dass das Vorsehen eines Transponders in einem Fahrzeug sowohl die Ortung als auch die Identifizierung des Fahrzeugs ermöglicht. Das erfindungsgemäße Verfahren gestattet es daher aufgrund der vollautomatischen Ortung und Identifizierung des Transponders, Parkgebühren vollständig automatisch abzurechnen. Die automatische Abrechnung stellt dabei sicher, dass die Parkgebühren für einen Parkvorgang bezahlt werden, wodurch Einnahmeverluste durch unberechtigt nicht bezahlte Parkgebühren vermieden werden können. Zudem kann Parküberwachungspersonal eingespart werden, was zu einer Kostenreduktion führen kann.

Der Bezahlvorgang für die Parkgebühren wird erfindungsgemäß stark vereinfacht und bedarf keiner Interaktion des Fahrers. Insbesondere können durch das erfindungsgemäße Verfahren teure Bodensensoren zur Fahrzeugerkennung oder Schranken eingespart werden, die die Zufahrt zu der Parkplatzfläche regeln. Die oftmals erheblichen Investitions- und Wartungskosten für solche Bodensensoren und Schranken können dann entfallen.

Nachfolgend werden die einzelnen Schritte des Verfahrens genauer erläutert.

Die Parkplatzbereiche innerhalb der Parkfläche können beispielsweise einmalig festgelegt werden. Alternativ können die Parkplatzbereiche auch anhand der Position von Fahrzeugen bzw. deren Transpondern erkannt werden. Eine Parkplatzfläche bezeichnet dabei einen Flächenbereich, in welchem sich mehrere Parkplatzbereiche befinden. Ein Parkplatzbereich kann auch als einzelner Stellplatz bezeichnet werden, d.h. ein Parkplatzbereich bietet üblicherweise einem Fahrzeug Platz.

Der in dem Fahrzeug angeordnete Transponder kann beispielsweise im Handschuhfach oder hinter der Windschutzscheibe mitgeführt werden und eine Batterie oder einen Akku zur Energieversorgung umfassen. Der Transponder kann auch fest in einem Fahrzeug verbaut sein und beispielsweise in einem Rückspiegel des Fahrzeugs angeordnet sein. Der Transponder kann in diesem Fall mit dem Bordnetz des Fahrzeugs gekoppelt sein. Der Transponder kann etwa die Größe einer Zigarettenschachtel, einer Streichholzschachtel oder einer Kreditkarte aufweisen und automatisch das Erkennungssignal aussenden. Das automatische Aussenden kann dabei in gleichbleibenden zeitlichen Abständen ohne eine Einwirkung von außen erfolgen. Alternativ kann der Transponder als Antwort auf ein von außen eintreffendes Anfragesignal automatisch das Erkennungssignal aussenden. Bei dem Erkennungssignal und dem Anfragesignal kann es sich um Radiosignale, d.h. Funksignale, handeln.

Das Erkennungssignal wird von den drei Funkeinrichtungen (auch Anker genannt) empfangen, wobei die absolute oder relative Position des Fahrzeugs (d.h. die Position des Transponders) mittels Triangulation aufgrund von Laufzeitunterschieden zu den einzelnen Funkeinrichtungen ermittelt wird. Die Relativpositionen der Funkeinrichtungen zueinander können dabei bekannt sein. Alternativ können auch die Absolutpositionen, wie z.B. die GPS-Koordinaten, der Funkeinrichtungen bekannt sein. Anstelle von drei Funkeinrichtungen können insbesondere auch 4, 5 oder 6 Funkeinrichtungen verwendet werden, wodurch die Genauigkeit der Ortung erhöht werden kann.

In dem Erkennungssignal kann ein Identifikationscode des Transponders enthalten sein, der beispielsweise eine eindeutige Seriennummer des Transponders angibt. Anhand des Identifikationscodes kann die Steuereinrichtung die Identifikation des Transponders ermitteln.

Nachdem die Position des Fahrzeugs bekannt ist, kann durch einen Vergleich mit den bekannten Parkplatzbereichen festgestellt werden, ob sich das Fahrzeug in einem der Parkplatzbereiche befindet, d.h. auf einem der Parkplatzbereiche steht.

Weiterhin kann anhand des Erkennungssignals ermittelt werden, ob das Fahrzeug parkt. Dies kann beispielsweise derart erfolgen, dass die Position des Fahrzeugs anhand mehrerer aufeinanderfolgender Erkennungssignale mehrmals berechnet wird, wobei bei einer über eine vorbestimmte Zeitdauer gleichbleibenden Position davon ausgegangen wird, dass das Fahrzeug parkt.

Wenn festgestellt wurde, dass das Fahrzeug auf einem der Parkplatzbereiche parkt, so wird die Identifikation des Transponders und der von dem Fahrzeug verwendete Parkplatzbereich an den Registrierungsserver übermittelt, wobei der Registrierungsserver anhand eines Tarifs für den verwendeten Parkplatzbereich eine Parkgebühr ermittelt. Dies bedeutet, der Registrierungsserver überprüft, welcher Geldbetrag für das Parken auf einem bestimmten Parkplatzbereich fällig ist und leitet daraufhin gegebenenfalls einen Bezahlvorgang ein. Der Bezahlvorgang wird beispielsweise dann nicht eingeleitet, wenn das Parken auf dem Parkplatzbereich momentan kostenlos ist.

Bei dem Bezahlvorgang kann es sich um ein Abbuchen von einem Konto, von einer Kreditkarte, von einem PayPal-Account oder um das automatische Erstellen und Versenden einer Rechnung handeln. Alternativ kann der Registrierungsserver auch auf eine Datenbank zugreifen, in welcher eingezahlte Guthaben gespeichert sind und das Guthaben für den jeweiligen Transponder bzw. den jeweiligen Fahrzeughalter um die ermittelte Parkgebühr reduzieren.

Vorteilhafterweise wird der Bezahlvorgang erst dann eingeleitet, wenn das Fahrzeug den Parkplatzbereich wieder verlassen hat, d.h. der Parkvorgang beendet ist. Die zahlbare Parkgebühr kann dann anhand der Dauer des Parkvorgangs ermittelt werden. Hierzu kann festgestellt werden, ob das Fahrzeug den Parkplatzbereich verlassen hat, wobei zusätzlich eine Dauer des Parkvorgangs an den Registrierungsserver übermittelt werden kann.

Insbesondere kann das erfindungsgemäße Verfahren wiederholt durchgeführt werden, wobei das Verfahren beispielsweise für jedes neu auf der Parkplatzfläche eintreffende Fahrzeug wiederholt wird. Bevorzugt werden Erkennungssignale nahezu ständig (z.B. mehrmals pro Sekunde) ausgesendet oder angefordert, so dass die Veränderung der Position eines Fahrzeugs nachvollziehbar ist. Auch können eine Vielzahl von Transpondern oder Fahrzeugen gleichzeitig geortet werden, wodurch auch große Parkplatzflächen überwacht werden können.

Vorteilhafte Weiterbildungen der Erfindung sind der Beschreibung, den Zeichnungen sowie den Unteransprüchen zu entnehmen.

Gemäß einer ersten vorteilhaften Ausführungsform wird ein Stillstand des Fahrzeugs, welcher länger als eine vorbestimmte Zeitdauer andauert, als Parken des Fahrzeugs registriert. Dies bedeutet, ein Stillstand von länger als beispielsweise zwei oder fünf Minuten kann als Parken definiert sein. Hierdurch kann ausgeschlossen werden, dass z.B. ein im Stau stehendes Fahrzeug, welches sich sporadisch bewegt, als parkendes Fahrzeug angesehen wird. Insbesondere kann die Parkgebühr erst ab dem Zeitpunkt berechnet werden, an dem das Fahrzeug als parkend registriert ist.

Gemäß einer weiteren vorteilhaften Ausführungsform wird der Identifikation des Transponders von dem Registrierungsserver ein Fahrzeughalter zugeordnet und wird anhand von persönlichen Daten des Fahrzeughalters der Tarif ermittelt. Dies bedeutet, dass in dem Registrierungsserver persönliche Daten der Fahrzeughalter gespeichert sein können, wobei ein jeweiliger Transponder einem jeweiligen Fahrzeughalter zugeordnet ist. Die Tarife für verschiedene Fahrzeughalter können sich aufgrund der persönlichen Daten unterscheiden, beispielsweise können Anwohner, Bahnticketinhaber, behinderte Menschen, Flatrate-Bucher usw. von reduzierten Tarifen profitieren. Weiterhin kann mit der Identifikation des Transponders auch eine Schadstoffklasse des jeweiligen Fahrzeugs verknüpft sein, wodurch für schadstoffarme Fahrzeuge ein geringerer Tarif und damit eine geringere Parkgebühr berechnet werden können.

In dem Registrierungsserver können auch weitere Tarifmodalitäten hinterlegt sein, beispielsweise dass die ersten 5, 15 oder 30 Minuten der Parkdauer gratis sind. Insbesondere kann der Bezahlvorgang bei einem Gratis-Tarif entfallen. Alternativ kann der Bezahlvorgang auch mit einem Betrag von Null durchgeführt werden. Weiterhin können auch Gebühren beispielsweise für eine City-Maut oder das Durchfahren einer Umweltzone zusammen mit den Parkgebühren eingezogen werden.

Die Tarifmodalitäten können auch das Gutschreiben von Geld oder von Punkten umfassen, beispielsweise für Cash-Back-Systeme oder Bonus-Systeme. Durch eine solche Belohnung eines Benutzers eines Parkplatzes kann z.B. die Benutzung von Park&Ride Parkplätzen gefördert werden. Ein gutgeschriebener Geld- oder Punktebetrag für einen Parkvorgang auf einem Park&Ride Parkplatz kann dabei umso größer ausfallen, je weiter der Park&Ride Parkplatz von einem Stadtzentrum entfernt ist. Die Verkehrsbelastung von Innenstädten kann auf diese Weise gesenkt werden. Zudem können die Verkehrsteilnehmer durch die Belohnung motiviert werden, einen Transponder mitzuführen.

Bevorzugt wird der Tarif auch anhand der Uhrzeit, des Wochentags und/oder der Lage des verwendeten Parkplatzbereichs ermittelt. Hierdurch wird die Möglichkeit geschaffen, beispielsweise zu Stoßzeiten höhere Tarife zu verlangen, wohingegen z.B. nachts oder an Sonntagen das Parken günstiger sein kann. Insbesondere die Abrechnung komplexer Tarifmodelle wird durch das hier beschriebene automatische Verfahren stark vereinfacht, da die Berechnung der Parkgebühren und deren Bezahlung automatisch erfolgen.

Gemäß einer weiteren vorteilhaften Ausführungsform ist der Identifikation des Transponders ein Guthaben zugeordnet, welches bei dem Bezahlvorgang um die Parkgebühr verringert wird. Somit sind beispielsweise auch Prepaid-Modelle möglich, wobei das Guthaben einem vorher eingezahlten Geldbetrag entspricht. Dem Guthaben kann auch eine Adresse des Fahrzeughalters zugeordnet sein. Alternativ kann der Fahrzeughalter aber auch anonym bleiben.

Bevorzugt kann der Transponder für einen geringen Geldbetrag von z.B. 10 € verkauft werden, wobei der gezahlte Geldbetrag bereits als Guthaben verbucht werden kann. Ist das Guthaben verbraucht, kann der Fahrer das Guthaben - ähnlich zu einer Prepaidkarte eines Mobiltelefons - durch Zukaufen von neuem Guthaben wieder aufladen.

Gemäß einer weiteren vorteilhaften Ausführungsform sendet der Transponder das Erkennungssignal verschlüsselt aus, wobei das Erkennungssignal insbesondere mittels eines asymmetrischen Verschlüsselungsverfahrens erzeugt wird. Hierdurch kann unterbunden werden, dass das Erkennungssignal des Transponders abgefangen, kopiert und von einem Dritten wiederholt ausgesandt wird, um den ursprünglichen Transponder nachzuahmen. Auf diese Weise wird erschwert, dass die Identität des Transponders gestohlen wird. Bevorzugt kann das Erkennungssignal einen variablen Anteil aufweisen, beispielsweise einen Zeitstempel, eine Zufallszahl oder einen Teil des Anfragesignals, wobei der variable Anteil ebenfalls verschlüsselt wird. Hierdurch kann die Nachahmung des Erkennungssignals weiter erschwert werden.

Es ist bevorzugt, wenn ein Hinweissignal ausgegeben wird, sofern ein Fahrzeug außerhalb der Parkplatzbereiche parkt. Das Hinweissignal kann beispielsweise dann ausgegeben werden, wenn ein Parken in zweiter Reihe, in einer Feuerwehranfahrtszone und dergleichen erkannt wird. Das Hinweissignal kann von der Steuereinrichtung oder von dem Registrierungsserver ausgegeben werden und beispielsweise ein Ordnungsamt oder die Polizei über den unerwünschten Parkvorgang informieren.

Gemäß einer weiteren vorteilhaften Ausführungsform wird eine Auswertung der belegten und freien Parkplatzbereiche vorgenommen und werden Daten der freien Parkplatzbereiche einem Parkleitsystem zugeführt. Sofern das Mitführen eines Transponders in einem Fahrzeug zwingend vorgeschrieben ist, kann anhand des Transponders zwischen freien und belegten Parkplatzbereichen unterschieden werden. Die Anzahl der freien Parkplatzbereiche kann dann einem Parkleitsystem zugeführt werden, wodurch parkplatzsuchende Verkehrsteilnehmer schnell und effektiv zu freien Parkplatzbereichen geleitet werden können. Alternativ können die freien Parkplatzbereiche auch in einer Datenbank hinterlegt werden, auf die mittels einer Weboberfläche oder einer Applikation eines Smartphones zugegriffen werden kann.

Die Auswertung über die belegten und freien Parkplatzbereiche kann auch eine statistische Auswertung umfassen, anhand der Vorhersagen über zukünftig frei werdende Parkplatzbereiche (beispielsweise anhand einer Warteschlangentheorie) getroffen werden können. Hierdurch können Fahrer, die sich noch weit von ihrem Zielgebiet entfernt befinden, so geleitet werden, dass sie bei ihrer Ankunft mit hoher Wahrscheinlichkeit einen freien Parkplatzbereich antreffen.

Gemäß einer weiteren vorteilhaften Ausführungsform wird ein Benachrichtigungssignal ausgegeben, sofern von dem Überwachungssystem ein Fahrzeug auf einem Parkplatzbereich detektiert wird, wobei die Position oder Anwesenheit des Fahrzeugs nicht mittels eines Erkennungssignals festgestellt wurde. Das Benachrichtigungssignal kann dazu dienen, Fahrzeuge ohne Transponder bzw. mit defektem Transponder zu melden, sodass Parküberwachungspersonal gezielt die Bezahlung der Parkgebühren für dieses Fahrzeug (z.B. mittels herkömmlichem Parkschein) überprüfen kann.

Die Erfindung betrifft weiterhin ein System, umfassend zumindest einen Transponder, zumindest drei ortsfest beabstandet zueinander angeordnete Funkeinrichtungen, ein Überwachungssystem zur insbesondere optischen, zumindest bereichsweisen Erfassung der Parkplatzfläche, eine Steuereinrichtung und einen Registrierungsserver, welcher mittels einer Datenverbindung mit der Steuereinrichtung verbunden ist. Das erfindungsgemäße System zeichnet sich dadurch aus, dass das System zur Durchführung des oben beschriebenen Verfahrens ausgebildet ist. Das Überwachungssystem umfasst insbesondere ein Kamerasystem und eine Erkennungseinheit, die ausgebildet ist, freie und besetzte Parkplatzbereiche, insbesondere mittels Bildverarbeitung, bevorzugt anhand von Einzelbildern, zu erkennen. Neben der Erkennung von parkenden Fahrzeugen anhand der Transponder und deren Erkennungssignalen kann - wie oben erläutert - eine zusätzliche Überprüfung der Parksituation mittels des Überwachungssystems erfolgen. Das Überwachungssystem wird im Folgenden noch näher beschrieben.

Gemäß einer vorteilhaften Weiterbildung des Systems sind die Funkeinrichtungen in oder an Straßenleuchten, an Fassaden, an Straßenschildern, in dem Überwachungssystem und/oder an Ampeln angebracht. Dies bedeutet, die Funkeinrichtungen können erhöht über dem Boden angeordnet sein, wodurch sich ein guter Empfang der Erkennungssignale ergibt.

Die Funkeinrichtungen können die Stromversorgung der Straßenleuchte oder der Ampeln mitbenutzen. Hierdurch kann der Installationsaufwand für die Funkeinrichtungen reduziert wird.

Alternativ können die Funkeinrichtungen oder das gesamte System von Solarzellen mit elektrischer Energie versorgt werden. Hierzu können die Funkeinrichtungen jeweils eine Solarzelle umfassen. Die Verwendung von Solarzellen kann den Einsatz des Systems in schlecht erschlossenen Gebieten ermöglichen, z.B. in ländlichen Regionen. Zudem verringern Solarzellen den Aufwand zur Einrichtung des Systems, da beispielsweise nicht jede Funkeinrichtung separat an ein Stromnetz angeschlossen werden muss. In den genannten ländlichen Regionen sind oft Park&Ride Parkplätze vorhanden, die durch die Verwendung von Solarzellen ohne große Investitionen überwacht werden können. Um eine Datenverbindung zu dem Registrierungsserver herzustellen kann eine Mobilfunk-Verbindung als Datenverbindung eingesetzt werden. Bevorzugt kann das System bei der Verwendung von Solarzellen nachts abgeschaltet werden, da Park&Ride Parkplätze üblicherweise nur tagsüber stark frequentiert sind.

Gemäß einer Ausführungsform umfasst das erfindungsgemäße System auch einen RFID-Chip (Radio-Frequency Identification-Chip), welcher an oder in dem Transponder angeordnet ist. Der RFID-Chip kann bevorzugt ausschließlich passiv betrieben werden, d.h. die zum Betrieb des RFID-Chips (z.B. zum Senden mittels des RFID-Chips) notwendige Energie muss von extern zugeführt werden, beispielsweise mittels eines elektromagnetischen Feldes eines RFID-Lesers. Der RFID-Chip kann insbesondere eine in einer Ebene angeordnete spulenartige Antenne umfassen. Ein passiver RFID-Chip benötigt keine eigene Energieversorgung und ist aus diesem Grund besonders platzsparend. Die Abmessungen des Transponders müssen für die zusätzliche Aufnahme des RFID-Chips deshalb nicht oder nur minimal vergrößert werden.

Neben dem passiven RFID-Chip kann der Transponder auch eine aktive Sende- und Empfangseinheit umfassen, die bevorzugt mit einer eigenen Energiequelle (z.B. einer Batterie) gekoppelt ist. Die Sende- und Empfangseinheit ist bevorzugt zum Empfangen des Anfragesignals und zum Aussenden des Erkennungssignals ausgebildet.

Mittels des RFID-Chips kann bevorzugt eine Kennung über eine Distanz von z.B. mehreren Zentimetern oder wenigen Metern (z.B. < 10 Meter) übertragen werden. Anhand der Kennung kann der RFID-Chip und damit auch der mit dem RFID-Chip mechanisch gekoppelte Transponder identifiziert werden. Der Transponder kann es auf diese Weise gestatten, auch Zugang z.B. zu einem Parkhaus zu erlangen, das eine Eingangskontrolle verwendet, welche auf RFID-Technologie basiert.

Durch den RFID-Chip kann der Einsatzbereich des Transponders (bzw. einer Karte, die den Transponder beherbergt) weiter vergrößert werden, da zwei unterschiedliche Technologien (d.h. das Erkennungssignal und der RFID-Chip) parallel verwendet werden können. Somit können nicht nur Parkvorgänge in der oben beschriebenen Art und Weise mittels des Erkennungssignals detektiert werden. Zusätzlich werden auch Einsatzmöglichkeiten in Gebieten geschaffen, in welchen kein Erkennungssignal sondern eine Identifikation mittels RFID benötigt wird.

Hierzu können sowohl der Transponder als auch der RFID-Chip jeweils einem Konto und/oder einer Kreditkarte zugeordnet sein, um z.B. eine Bezahlung von Parkvorgängen zu ermöglichen.

Bevorzugt umfasst der Transponder eine Solarzelle, welche den Transponder mit Energie versorgt, wobei der Transponder zur Befestigung an einer Windschutzscheibe eines Fahrzeugs ausgebildet ist. Die Solarzelle kann es erlauben, den Transponder über prinzipiell unbeschränkte Zeiträume zu betreiben, ohne dass beispielsweise eine Batterie gewechselt werden muss. Auf diese Weise wird die Bezahlung von Parkgebühren für einen Benutzer weiter vereinfacht, da der Transponder nur einmalig in dem Fahrzeug z.B. hinter der Windschutzscheibe befestigt werden muss, wobei nachfolgend keine weiteren Wartungsmaßnahmen an dem Transponder notwendig sind. Der Transponder kann beispielsweise eine Klebefläche umfassen, mit welcher der Transponder an der Windschutzscheibe befestigbar ist.

Bevorzugt sind der Transponder und die Funkeinrichtung für eine Funkkommunikation im Frequenzbereich von etwa 2,4 GHz ausgebildet, wobei beispielsweise ein Frequenzbereich von 2,2 GHz bis 2,6 GHz verwendet werden kann. Insbesondere verwenden der Transponder und die Funkeinrichtung WLAN, Bluetooth und/oder ZigBee. Bevorzugt wird das ISM-Band verwendet, das sich im Bereich von 2,4 GHz befindet.

Die Erkennungssignale können sogenannte "Chirp"-Impulse mit veränderlicher Frequenz sein, wobei während eines Impulses die Sendefrequenz von einer Startfrequenz bis zu einer Endfrequenz verändert wird. Die Frequenzveränderung schafft die Möglichkeit, das Erkennungssignal auch bei breitbandiger Hintergrundstrahlung sicher zu detektieren.

Gemäß einer weiteren vorteilhaften Ausführungsform des erfindungsgemäßen Systems ist ein Mobilgerät vorgesehen, welches ausgebildet ist, Erkennungssignale des Transponders zu empfangen, eine Identifikation des Transponders an den Registrierungsserver zu übertragen und von dem Registrierungsserver Informationen über ein dem Transponder zugeordnetes Fahrzeug zu empfangen. Das Mobilgerät kann beispielsweise von Parküberwachungspersonal mitgeführt werden. Mit dem Mobilgerät kann für ein jeweiliges Fahrzeug die Identifikation des Transponders festgestellt werden, wobei mittels eines Rückkanals von dem Registrierungsserver Informationen über das dem jeweiligen Transponder zugeordnete Fahrzeug von dem Mobilgerät empfangen werden können. Das Mobilgerät erlaubt es hierdurch, zu überprüfen, ob ein Transponder auch in dem ihm zugeordneten Fahrzeug vorhanden ist, so dass eine Weitergabe von Transpondern oder eine Mehrfachnutzung von Transpondern in verschiedenen Fahrzeugen unterbunden bzw. mit Sanktionen belegt werden kann.

Bevorzugt umfasst die Erkennungseinheit des Überwachungssystems auch die Steuereinrichtung. Hierdurch kann in dem erfindungsgemäßen System lediglich ein einzelner Prozessor vorhanden sein, der sowohl die Erkennungssignale als auch die von dem Überwachungssystem zur Verfügung gestellten Daten auswertet. Hierdurch können die Kosten des Systems reduziert werden.

Die Erkennungseinheit bzw. das Überwachungssystem kann auch als Brücke (d.h. als Gateway) dienen und eine Internet- und/oder Datenverbindung zwischen der Steuereinrichtung und dem Registrierungsserver herstellen. Eine eventuell ohnehin vorhandene Internetverbindung des Überwachungssystems kann dann besser ausgenutzt werden.

Im Folgenden werden mögliche Ausführungsformen des Überwachungssystems näher erläutert.

Das Überwachungssystem umfasst bevorzugt zumindest eine Straßenbeleuchtungseinrichtung, ein an der Straßenbeleuchtungseinrichtung montiertes Kamerasystem, eine Erkennungseinheit, eine Sendeeinheit und ein mobiles Anzeigegerät, wobei das Kamerasystem zum Liefern von Abbildindizien von innerhalb der Parkplatzfläche liegenden Parkplatzbereichen ausgebildet ist und wobei die Erkennungseinheit insbesondere ausgebildet ist, um
- die geografischen Koordinaten von sich im Sichtbereich des Kamerasystems befindlichen Parkplatzbereichen abzuspeichern,
- in Abhängigkeit von den Abbildindizien den Parkplatzbereichen je einen Belegungsstatus zuzuordnen, der kennzeichnet, ob ein jeweiliger Parkplatzbereich frei oder besetzt ist,
- den jeweiligen Belegungsstatus zumindest der freien Parkplatzbereiche mit den zugehörigen geografischen Koordinaten der Sendeeinheit zur Verfügung zu stellen,
wobei die Sendeeinheit bevorzugt dazu ausgebildet ist, den jeweiligen Belegungsstatus zumindest der freien Parkplatzbereiche mit den zugehörigen geografischen Koordinaten an das mobile Anzeigegerät zu senden.

Das Überwachungssystem kann eine zumindest eine der Funkeinrichtungen umfassen und so zur Ortung des Transponders beitragen. Zudem kann der Belegungsstatus mit den Daten verglichen werden, die aufgrund der Positionsbestimmung mittels des Transponders vorhanden sind, wodurch Parkvorgänge verifiziert werden können.

Das Überwachungssystems kann mittels des Kamerasystems die Parkplatzfläche optisch überwachen, wobei innerhalb der von dem Kamerasystem überwachten Parkplatzfläche freie Parkplatzbereiche dynamisch ermittelt und angezeigt werden können. Um das Überwachungssystem zu realisieren, können zumindest ein Kamerasystem, zumindest eine Erkennungseinheit, zumindest eine Sendeeinheit und/oder zumindest ein Anzeigegerät zusammenwirken. Das Kamerasystem kann dabei an einer Straßenbeleuchtungseinrichtung montiert sein, wodurch auf vorteilhafte Weise erreicht wird, dass für die Montage keine Erlaubnis von privaten Gebäudebesitzern eingeholt werden muss. Zudem kann bei Bedarf die Energiequelle der Straßenbeleuchtungseinrichtung die Energieversorgung des Kamerasystems und damit verbundener Komponenten ermöglichen, alternativ ist aber auch ein Akku- oder Batteriebetrieb möglich.

Das Kamerasystem kann so montiert und ausgerichtet sein, dass es bevorzugt jeweils mehrere Parkplatzbereiche einer Parkplatzfläche erfassen kann. Die vom Kamerasystem an die Erkennungseinheit gelieferten Abbildindizien der Parkplatzbereiche können beispielsweise Bildaufnahmen der kompletten Parkplatzbereiche oder aber auch nur Bilder von Teilbereichen der Parkplatzbereiche sein. Die Abbildindizien müssen lediglich einen Parkplatzbereich in solch einer Weise repräsentieren, dass die Erkennungseinheit anhand der Abbildindizien den Parkplatzbereichen einen Belegungsstatus zuordnen kann, der kennzeichnet, ob ein jeweiliger Parkplatzbereich frei oder besetzt ist. Der durch die Erkennungseinheit ermittelte Belegungsstatus eines Parkplatzbereiches wird dann seinen jeweiligen geografischen Koordinaten zugeordnet, die in der Erkennungseinheit abgespeichert sind. Daraufhin werden diese geografischen Koordinaten gemeinsam mit dem zugehörigen Belegungsstatus der Sendeeinheit übermittelt, die diese Daten dann an das Anzeigegerät sendet, das optisch oder akustisch veranschaulicht, an welchen geografischen Orten sich freie Parkplatzbereiche befinden.

Als Anzeigegerät kann bevorzugt ein internetfähiges, mobiles oder stationäres Endgerät zum Einsatz gelangen. Besonders bevorzugt ist es, wenn das Anzeigegerät als internetfähiges Mobiltelefon ("Smartphone") oder als internetfähiger Fahrzeugcomputer ausgestaltet ist. Ebenso kann aber auch ein stationärer Computer oder eine Anzeigetafel zum Einsatz gelangen.

Die Sendeeinheit kann die genannten Daten an eine Vielzahl von Anzeigegeräten unterschiedlicher Nutzer liefern, denen jeweils veranschaulicht werden kann, an welchen Orten sie freie Parkplatzbereiche finden können.

Mittels des Überwachungssystems kann folglich eine Vielzahl von beispielsweise öffentlichen Parkplatzbereichen gemeinsam mit ihrem jeweiligen Belegungsstatus erfasst werden, wobei auf Basis der erfassten Daten einer großen Anzahl von Nutzern mitgeteilt werden kann, wo sich zu einem aktuellen Zeitpunkt gerade freie Parkplatzbereiche befinden, die dann gezielt und auf dem kürzesten Weg angefahren werden können.

Die zum Einsatz gelangende Erkennungseinheit kann sich vollständig im Gehäuse des Kamerasystems befinden, es können aber auch nur Teile der Erkennungseinheit im Gehäuse des Kamerasystems untergebracht sein. In letztgenanntem Fall befinden sich die restlichen Teile der Erkennungseinheit in der Regel im Bereich der Sendeeinheit, insbesondere innerhalb eines Servers, der auch die Sendeeinheit beinhaltet. Der Server kann identisch zu dem Registrierungsserver sein, wodurch das Überwachungssystem und die Steuereinrichtung auf den gleichen Server zugreifen können. Die Sendeeinheit kann räumlich beabstandet von der Straßenbeleuchtungseinrichtung beispielsweise in einem Serverraum untergebracht sein, wobei der Server bevorzugt drahtlos Belegungsstatusinformationen oder Abbildindizien bzw. Daten von mehreren Kamerasystem und/oder Erkennungseinheiten zur Verfügung gestellt bekommt.

Besonders bevorzugt ist es, wenn ein Großteil der Auswertung der Abbildindizien innerhalb der im Gehäuse des Kamerasystems untergebrachten Erkennungseinheit erfolgt, da dann nur die aus der Auswertung resultierenden Daten an die Sendeeinheit bzw. den Server übertragen werden müssen. Der Umfang dieser Daten ist deutlich geringer als die vom Kamerasystem gelieferten Daten bzw. Abbildindizien, so dass für die Übertragung dieser Daten von der Erkennungseinheit an den Server bzw. an die Sendeeinheit nur eine geringe Bandbreite benötigt wird. Zudem werden dann im Server nur Auswertungsdaten gespeichert oder verarbeitet, die unter Datenschutzaspekten unkritisch sind, da solche Auswertungsdaten im Unterschied zu den Abbildindizien beispielsweise keine Kfz-Kennzeichen umfassen.

Wenn beispielsweise entlang einer langen Straße Kamerasysteme an unterschiedlichen Straßenbeleuchtungseinrichtungen montiert sind, ist es nicht nötig, dass jedem Kamerasystem eine eigene Erkennungseinheit zugeordnet ist, die jeweils mit der Sendeeinheit bzw. einem Server kommuniziert. Vielmehr ist es in diesem Fall sinnvoll, dass nur eine oder wenige der Erkennungseinheiten die genannte Kommunikation übernehmen, wohingegen die anderen Erkennungseinheiten ihre Daten mit einem schmalbandigen Übertragungssystem an die eine oder wenige Erkennungseinheiten übertragen, die dann mit der Sendeeinheit bzw. dem Server kommunizieren.

Alternativ findet die Auswertung der Abbildindizien ausschließlich innerhalb eines Gehäuses des Kamerasystems und insbesondere ausschließlich in der Erkennungseinheit statt. Dies bedeutet, dass außer dem Belegungsstatus, der z.B. die Koordinaten von freien und besetzten Parkplatzbereichen angibt, keine weiteren Daten das Gehäuse des Kamerasystems verlassen müssen. Hierfür können das Kamerasystem und die Erkennungseinheit in einem gemeinsamen Gehäuse angeordnet sein, wobei insbesondere das Gehäuse des Kamerasystems das gemeinsame Gehäuse bildet. Die von dem Kamerasystem aufgenommenen Bilder bzw. die Abbildindizien können somit innerhalb des Gehäuses verarbeitet und anschließend verworfen werden. Auch strenge Datenschutzvorgaben, die den öffentlichen Raum betreffen, können auf diese Weise erfüllt werden, da keine Bilddaten, Personeninformationen und dergleichen gespeichert oder ausgegeben werden.

Bevorzugt umfassen die Abbildindizien ausschließlich Einzelbilder, d.h. Standbilder. Dies bedeutet, die Auswertung in der Erkennungseinheit kann nur auf Einzelbildern basieren. Dabei kann der jeweilige Belegungsstatus alleine anhand nur eines Einzelbildes ermittelt werden. Alternativ oder zusätzlich können auch Unterschiede zwischen zwei Einzelbildern desselben Ausschnitts der Parkplatzfläche (d.h. Unterschiede zwischen zwei Abbildindizien) zur Ermittlung des Belegungsstatus herangezogen werden.

Insbesondere können nacheinander jeweils Einzelbilder verschiedener Bereiche der Parkplatzfläche erfasst werden. Bei der Verwendung eines schwenkbaren Kamerasystems kann das Kamerasystem nach der Aufnahme eines Einzelbildes geschwenkt werden und einen anderen Bereich der Parkplatzfläche erfassen.

Werden mehrere Kameras verwendet, können die Kameras nacheinander jeweils ein Einzelbild aufnehmen und an die Erkennungseinheit übermitteln.

Weiter bevorzugt ist die Erkennungseinheit ausgebildet, einen Belegungsstatus unabhängig von vorgegebenen, beispielsweise durch Bodenlinien definierten, Parkplatzbereichen zu ermitteln. Dies bedeutet, dass auf einer Parkplatzfläche auch Parkplatzbereiche als frei erkannt werden können, wenn die Parkplatzbereiche nicht durch Linien, Rechtecke und dergleichen als solche gekennzeichnet sind. Die Erkennung von freien Parkplatzbereichen kann somit im gesamten Sichtbereich des Kamerasystems durchgeführt werden, unabhängig davon ob die Parkplatzbereiche als solche markiert sind, oder nicht.

Die Erkennungseinheit kann ferner ausgebildet sein, die Größe eines jeweils als frei erkannten Parkplatzbereichs zu ermitteln und zusammen mit dem Belegungsstatus auszugeben. Anhand der Größe kann ein freier Parkplatzbereich einem in seinen Abmessungen passenden Fahrzeug zugeteilt werden, wodurch die Anzahl der auf einer Parkplatzfläche abstellbaren Fahrzeuge erhöht werden kann.

Gemäß einer vorteilhaften Ausführungsform ist das Kamerasystem eingerichtet, eine Belichtungszeit in einem im Wesentlichen unbegrenzten Zeitbereich in Abhängigkeit der Helligkeit im Sichtbereich des Kamerasystems einzustellen. Aufgrund der über einen weiten Zeitbereich einstellbaren Belichtungszeit wird es ermöglicht, auch bei Dunkelheit auswertbare Abbildindizien zu erzeugen, ohne auf eine zusätzliche Beleuchtung (z.B. eine Infrarotbeleuchtung) angewiesen zu sein. Die Belichtungszeit kann bevorzugt anhand der Helligkeit in einem Teilbereich des Sichtbereichs eingestellt werden. Beispielsweise können im Sichtbereich zwei quadratische Teilbereiche vorgegeben sein, innerhalb derer die Helligkeit bestimmt wird.

Die Möglichkeit im Wesentlichen beliebige Belichtungszeiten zu verwenden ergibt sich aus der Aufnahme von Einzelbildern, für die die jeweilige Belichtungszeit frei gewählt werden kann. Hierdurch entsteht ein Vorteil gegenüber Video-basierten Überwachungssystemen, bei welchen die maximale Belichtungszeit von der Bildrate abhängt und nicht beliebig groß eingestellt werden kann.

Wegen der längeren Belichtungszeit bei Dunkelheit kann die Anzahl der aufgenommenen Abbildindizien pro Zeiteinheit zurückgehen. Allerdings verändert sich der Belegungszustand von Parkplatzbereichen nicht in sehr kurzen Zeitabständen, sodass auch sehr lange Belichtungszeiten von mehreren Sekunden für eine ausreichend genaue Überwachung der Parkplatzbereiche genügen. Bevorzugt kann eine maximale Belichtungszeit von einer oder zwei Sekunden vorgegeben werden.

Die Erkennungseinheit kann dazu ausgebildet sein, Bewegungen des Kamerasystems, welche durch Bewegungen der Straßenbeleuchtungseinrichtung relativ zur Parkplatzfläche bedingt sind, in den vom Kamerasystem gelieferten Abbildindizien mittels eines Bildverarbeitungsverfahrens derart zu kompensieren, dass die Abbildindizien durch die Bewegungen des Kamerasystems nicht verfälscht sind. Somit können Bewegungen der Straßenbeleuchtungseinrichtung, die beispielsweise durch Wind bedingt sind, durch eine elektronische Bildstabilisierung kompensiert werden. Zu diesem Zweck können möglichst in der Bildmitte Referenzpunkte, wie z.B. Ampeln, Markierungen an Häusern oder Straßenschilder, festgelegt werden, welche eine unveränderliche Position relativ zu den erfassten Parkplatzbereichen besitzen. Bevorzugt kann eine Markierung an einem Trägerelement ("Leuchtenmast") der Straßenbeleuchtungseinrichtung angebracht sein, insbesondere in einem bodennahen Bereich des Trägerelements. Dies hat den Vorteil, dass die Markierung auch z.B. bei starkem Wind ihre Position kaum verändert und üblicherweise von dem Kamerasystem gut erfasst werden kann. Die Abbildindizien der Parkplatzbereiche können dann unabhängig von ihrer absoluten Position innerhalb des Bildes lediglich in Abhängigkeit ihrer Position relativ zu den Referenzpunkten bzw. zu der Markierung verarbeitet werden, wodurch sich die genannten Bewegungen der Straßenbeleuchtungseinrichtungen bei der Verarbeitung eliminieren lassen.

Zusätzlich kann auch eine Zusatzmarkierung an dem Trägerelement angebracht sein, die zu der Markierung beabstandet angeordnet ist. Aufgrund einer Verschiebung der Relativpositionen von Markierung und Zusatzmarkierung kann beispielsweise eine Verwindung des Trägerelements ermittelt werden. Hierdurch können Positionsveränderungen des Kamerasystems noch genauer bestimmt werden.

Alternativ oder zusätzlich können die Erkennungseinheit und/oder das Kamerasystem zumindest einen Beschleunigungssensor und/oder ein Gyroskop zur Erfassung von Bewegungen der Straßenbeleuchtungseinrichtung und des an ihr montierten Kamerasystems aufweisen. Mittels derartiger Komponenten lässt sich eine Rotation des Kamerasystems ebenso erfassen, wie Bewegungen entlang dreier orthogonaler Achsen. Aufgrund der von Beschleunigungssensor bzw. Gyroskop gelieferten Messdaten können die Abbildindizien des Kamerasystems wiederum so verarbeitet werden, dass sie durch Bewegungen der Straßenbeleuchtungseinrichtung nicht verfälscht werden.

Es existieren somit letztlich zwei unterschiedliche Methoden, Bewegungen der Straßenbeleuchtungseinrichtung zu kompensieren, wobei diese beiden Methoden alternativ oder kombiniert angewendet werden können. In der Regel wird die Kompensation mittels eines Bildverarbeitungsverfahrens dann eingesetzt, wenn gute und brauchbare Referenzpunkte zur Verfügung stehen. Sollte dies nicht der Fall sein, können Beschleunigungssensor bzw. Gyroskop eingesetzt werden.

Besonders vorteilhaft ist es, wenn das Kamerasystem einen elektrisch ansteuerbaren Schwenk-Neigekopf zur Bewegung zumindest einer Kameraoptik relativ zur Parkplatzfläche und/oder ein Zoomobjektiv aufweist. Durch die Bewegung des Schwenk-Neigekopfs und/oder durch Einstellung des Zoomobjektivs kann die gesamte, einem Kamerasystem zugeordnete Parkplatzfläche mit hoher Auflösung erfasst werden. Es wird auf diese Weise ein periodisches, exaktes Abfahren der kompletten Parkplatzfläche möglich, wobei im Rahmen eines Initialisierungsprozesses eine Reihe von Positionen des Schwenk-Neigekopfs mit zugehörigen Zoomeinstellungen festgelegt werden kann. Diese Positionen werden dann jeweils durch eine schnelle Bewegung des Schwenk-Neigekopfs und durch eine parallel erfolgende Zoomeinstellung angefahren, woraufhin ein Bild aufgenommen wird, so dass danach die nächste Position angefahren werden kann. Bereits während der Verstellung des Schwenk-Neigekopfs zwischen zwei Positionen können zuvor aufgenommene Bilder bzw. Abbildindizien von der Erkennungseinheit verarbeitet werden.

Besonders vorteilhaft ist die Tatsache, dass bei Einsatz eines Schwenk-Neigekopfs die Initialisierung und somit die jeweils erforderliche Ausrichtung des Kamerasystems nach dessen Montage an der Straßenbeleuchtungseinrichtung elektronisch und remote von geschultem Fachpersonal vorgenommen werden kann, da während der Montage selbst noch keinerlei Justierung nötig ist.

Alternativ oder zusätzlich zum Einsatz eines Schwenk-Neigekopfs kann das an der Straßenbeleuchtungseinrichtung angebrachte Kamerasystem auch eine Mehrzahl von relativ zueinander stationären, unterschiedlich zueinander orientierten Kameras aufweisen. Diese einzelnen Kameras decken dann die dem jeweiligen Kamerasystem zugeordnete Parkplatzfläche nahtlos und vollständig ab, insbesondere ohne dass hierfür eine Bewegung dieser Kameras nötig ist.

Sowohl durch den Einsatz eines Kamerasystems mit mehreren Kameras als auch durch den Einsatz eines Schwenk-Neigekopfs mit verstellbarem Zoomobjektiv lässt sich erreichen, dass Verzerrungen durch Weitwinkelobjektive weitgehend vermieden werden. In jedem Fall ist es sinnvoll, einen maximalen Kamerablickwinkel zur Aufnahme der Abbildindizien so zu wählen, dass keine Bildverzerrungen auftreten, alternativ ist es jedoch auch möglich, beim Auftreten von Verzerrungen eine rechnergestützte Entzerrung durchzuführen.

Gemäß einer bevorzugten Ausführungsform umfasst das Kamerasystem zumindest zwei feststehende unterschiedlich orientierte Kameras, deren Sichtbereiche sich zumindest bereichsweise überlappen. In dem sich überlappenden Sichtbereich kann bevorzugt die Markierung und/oder die Zusatzmarkierung bzw. der Referenzpunkt zur Kompensation von Bewegungen des Kamerasystems angeordnet sein. Vorteilhafterweise wertet die Erkennungseinheit zu einem Zeitpunkt oder während eines Zeitintervalls jeweils nur die Abbildindizien genau einer Kamera aus. Die jeweils andere Kamera oder die anderen Kameras kann/können zu dem Zeitpunkt bzw. während des Zeitintervalls abgeschaltet werden. Hierbei ist von Vorteil, dass der Energieverbrauch des Überwachungssystems reduziert werden kann. Zudem ergibt sich die Möglichkeit lediglich genau einen Prozessor (bzw. Mikroprozessor) in der Erkennungseinheit vorzusehen, der alternierend mit einer der jeweiligen Kameras gekoppelt wird. Auf diese Weise können die Materialkosten des Überwachungssystems reduziert werden.

Besonders vorteilhaft ist es, wenn das Kamerasystem an einer Auskragung der Straßenbeleuchtungseinrichtung befestigt ist. An einer solchen Auskragung sind in der Regel auch die Beleuchtungsmittel der Straßenbeleuchtungseinrichtung angeordnet, so dass man mit hoher Wahrscheinlichkeit davon ausgehen kann, dass sich zwischen der Auskragung und der zu beleuchtenden bzw. vom Kamerasystem zu erfassenden Fläche keine Gegenstände, wie beispielsweise Bäume, befinden. Insofern wird durch die Befestigung des Kamerasystems an der Auskragung erreicht, dass das Sichtfeld des Kamerasystems mit hoher Wahrscheinlichkeit nicht durch störende Gegenstände beschränkt ist.

Diese Wahrscheinlichkeit lässt sich zusätzlich erhöhen, wenn das Kamerasystem benachbart zu einem Beleuchtungsmodul der Straßenbeleuchtungseinrichtung derart angeordnet ist, dass der Abstand zwischen Kamerasystem und dem Trägerelement, beispielsweise dem Leuchtenmast, größer ist als der Abstand zwischen dem Beleuchtungsmodul und dem Trägerelement. Das Kamerasystem befindet sich dann möglichst weit weg vom Trägerelement und somit auch im maximalen Abstand zu Bäumen, die im Bereich des Trägerelements vorhanden sein können.

Es kann sich bei der Straßenbeleuchtungseinrichtung um ein lampentragendes Seilsystem handeln, welches beispielsweise zwischen mehreren Gebäuden installiert ist. Eine Seilverankerung kann Bestandteil der Straßenbeleuchtungseinrichtung sein, wobei das Kamerasystem an der Seilverankerung angebracht sein kann.

Die Erkennungseinheit kann dazu ausgebildet sein, die Helligkeit von Beleuchtungsmodulen der Straßenbeleuchtungseinrichtung in Abhängigkeit von aus den Abbildindizien ermittelten Parametern, insbesondere in Abhängigkeit von Helligkeitswerten und/oder detektierten Bewegungen zu steuern bzw. anzuschalten, abzuschalten oder zu dimmen. Dieser unter Energieeinsparungsaspekten interessanten Variante liegt die Erkenntnis zugrunde, dass eine vergleichsweise starke Beleuchtung der Parkplatzfläche nur dann nötig ist, wenn es dunkel ist und zugleich eine Bewegung von Fußgängern bzw. Autos detektiert wird. In anderen Fällen genügt eine abgedunkelte Beleuchtung, welche allerdings ausreichen muss, um die Parkplatzbereiche mittels des Kamerasystems mit ausreichender Auflösung zu erkennen. Beispielsweise kann bei Schnee auf der Parkplatzfläche die Beleuchtung gedimmt werden, wohingegen bei Laub auf der Parkplatzfläche die Beleuchtung verstärkt wird. Zudem wird es durch die genannte Variante möglich, die Beleuchtungsmodule zu dimmen, wenn die Parkplatzfläche bereits durch Autoscheinwerfer beleuchtet wird.

Besonders bevorzugt ist es, wenn die Erkennungseinheit dazu ausgebildet ist, die Helligkeit von Beleuchtungsmodulen der ihr zugeordneten und weiteren Straßenbeleuchtungseinrichtungen in Abhängigkeit von aus den Abbildindizien ermittelten Parametern, insbesondere in Abhängigkeit von Helligkeitswerten und/oder detektierten Bewegungen zu steuern. In diesem Fall können dann auch Straßenbeleuchtungseinrichtungen, die benachbart zum Überwachungssystem vorhanden sind und kein Überwachungssystem aufweisen, entsprechend angeschaltet, abgeschaltet oder gedimmt werden. Auf diese Weise lässt sich die Montage eines Überwachungssystems an jeder Straßenbeleuchtungseinrichtung vermeiden, vielmehr genügt es, wenn das Überwachungssystem lediglich an einigen Straßenbeleuchtungseinrichtungen vorhanden ist, die dann die anderen Straßenbeleuchtungseinrichtungen ebenfalls mit ansteuern.

Nachfolgend wird die Erfindung rein beispielhaft unter Bezugnahme auf die Zeichnungen beschrieben. Es zeigen:
- Fig. 1: eine schematische Ansicht eines Systems zur Erfassung von geparkten Fahrzeugen und zur Abrechnung von Parkgebühren; und
- Fig. 2: eine schematische Ansicht eines Transponders.

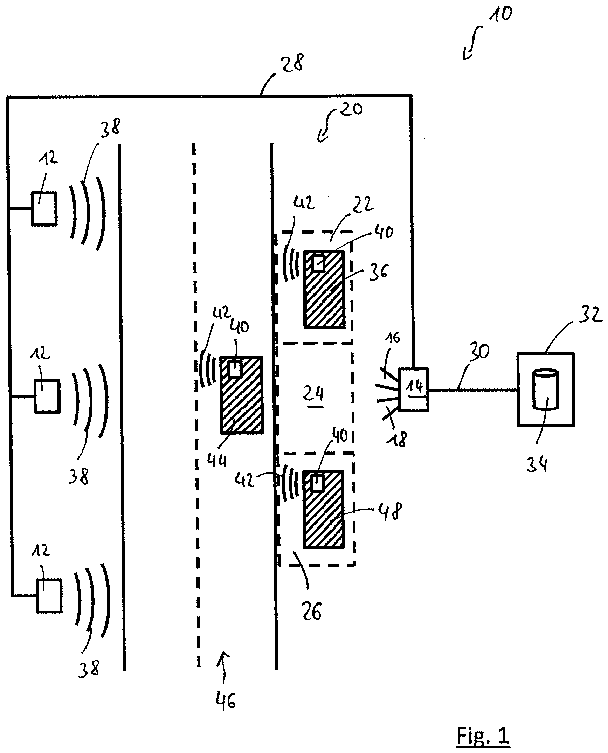

Fig. 1 zeigt schematisch eine Ansicht eines Systems 10 zur Erfassung von geparkten Fahrzeugen und zur Abrechnung von Parkgebühren. Das System 10 umfasst drei zueinander beabstandet angeordnete Funkeinrichtungen 12 sowie ein Überwachungssystem, von welchem eine Kameraeinheit 14 dargestellt ist. Die Kameraeinheit 14 umfasst eine erste Kamera 16 und eine zweite Kamera 18, deren Sichtbereiche sich zumindest bereichsweise überlappen.

Die Kameraeinheit 14 sowie die Funkeinrichtungen 12 überwachen eine Parkplatzfläche 20, auf der sich ein erster Parkplatzbereich 22, ein zweiter Parkplatzbereich 24 und ein dritter Parkplatzbereich 26 befinden. Die nachfolgende Erklärung bezieht sich lediglich beispielhaft auf drei Parkplatzbereiche 22, 24, 26, wobei das System 10 in der Lage ist, längere Straßenzüge oder große Flächen mit mehreren hundert Parkplatzbereichen zu überwachen.

Der erste Parkplatzbereich 22 und der zweite Parkplatzbereich 24 sind allgemein zugängliche Parkplatzbereiche. Der dritte Parkplatzbereich 26 hingegen ist ausschließlich für Menschen mit Behinderung freigegeben.

Die Funkeinrichtungen 12 sind mittels einer ersten Datenverbindung 28 mit der Kameraeinheit 14 gekoppelt, wobei in der Kameraeinheit 14 eine Steuereinrichtung und eine Erkennungseinheit (beide nicht gezeigt) vorgesehen sind. Die Kameraeinheit 14 wiederum ist mittels einer zweiten Datenverbindung 30 mit einem Registrierungsserver 32 gekoppelt. Der Registrierungsserver 32 umfasst eine Datenbank 34.

Nähert sich im Betrieb des Systems 10 ein erstes Fahrzeug 36 den Parkplatzbereichen 22, 24, 26, so werden mit den Funkeinrichtungen 12 wiederholt Anfragesignale 38 ausgesendet, die von einem Transponder 40 im ersten Fahrzeug 36 mit einem Erkennungssignal 42 beantwortet werden. Anhand der Laufzeit bis zum Empfang des Erkennungssignals 42 wird mittels Triangulation auf die Position des Transponders 40 geschlossen.

Wie in Fig. 1 ersichtlich ist, steht das erste Fahrzeug 36 auf dem ersten Parkplatzbereich 22. Die Position des ersten Fahrzeugs 36 wird wiederholt, beispielsweise jede Sekunde, durch erneutes Aussenden der Anfragesignale 38 und den erneuten Empfang des Erkennungssignals 42 bestimmt, so dass festgestellt werden kann, dass das erste Fahrzeug 36 dauerhaft auf dem ersten Parkplatzbereich 22 steht.

Zugleich wird mittels der Kameraeinheit 14 festgestellt, dass sich das erste Fahrzeug 36 (bzw. zumindest irgendein Fahrzeug) auf dem ersten Parkplatzbereich 22 befindet, wodurch die Ortung des ersten Fahrzeugs 36 mittels der Funkeinrichtungen 12 bestätigt wird.

Wird erkannt, dass das erste Fahrzeug 36 länger als zwei Minuten auf dem ersten Parkplatzbereich 22 verweilt, so wird über die zweite Datenverbindung 30 eine Identifikation des Transponders 40 bzw. des ersten Fahrzeugs 36 an den Registrierungsserver 32 übermittelt. Der Registrierungsserver 32 überprüft in seiner Datenbank 34, welchem Fahrzeughalter das erste Fahrzeug 36 zugeordnet ist.

Nachdem dem Registrierungsserver 32 später mitgeteilt wurde, dass das erste Fahrzeug 36 den ersten Parkplatzbereich 22 wieder verlassen hat, wird anhand der Parkdauer die Parkgebühr für das erste Fahrzeug 36 ermittelt und dem Fahrzeughalter abgebucht.

Ein zweites Fahrzeug 44 ist in zweiter Reihe auf einer Straße 46 geparkt. Das zweite Fahrzeug 44 wird auf die oben beschriebene Art anhand seines Transponders 40 geortet, wobei festgestellt wird, dass das zweite Fahrzeug 44 auf der Straße 46 parkt. Von der Steuereinrichtung in der Kameraeinheit 14 wird daraufhin ein Hinweissignal ausgegeben, welches Parküberwachungspersonal oder die Polizei von dem Parken in zweiter Reihe informiert.

Ein drittes Fahrzeug 48 wird ebenfalls als geparkt registriert, wobei das dritte Fahrzeug 48 auf dem für behinderte Menschen reservierten dritten Parkplatzbereich 26 parkt. Für das dritte Fahrzeug 48 wird in dem Registrierungsserver 32 überprüft, ob das dritte Fahrzeug 48 in der Datenbank als ein Fahrzeug für einen behinderten Menschen ausgewiesen ist. Ist dies nicht der Fall, kann von dem Registrierungsserver 32 eine entsprechende Benachrichtigung an Parküberwachungspersonal gesendet werden.

Es versteht sich, dass die Transponder 40 der verschiedenen Fahrzeuge 36, 44, 48 zwar gleichartige Erkennungssignale 42 aussenden, die Erkennungssignale 42 aber unterschiedliche Informationen enthalten, wobei z.B. für jedes Fahrzeug 36, 44, 48 eine andere Identifikationsnummer übertragen werden kann.

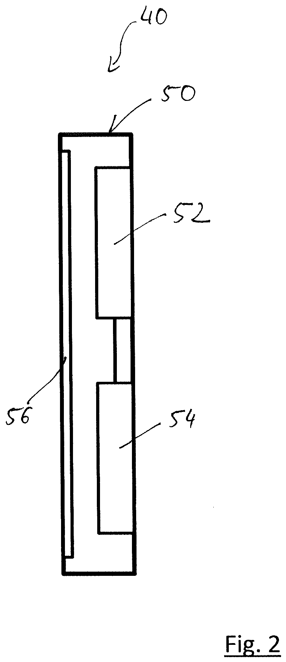

Fig. 2 zeigt einen Transponder 40 in einer schematischen Seitenansicht auf eine Schmalseite. Der Transponder 40 umfasst ein Gehäuse 50, welches etwa die Größe einer Kreditkarte aufweist, jedoch eine Dicke von zwei oder drei handelsüblichen Kreditkarten besitzt.

Der Transponder 40 umfasst eine in dem Gehäuse 50 angeordnete aktive Sende- und Empfangseinheit 52, die zum Empfangen des Anfragesignals 38 und zum Aussenden des Erkennungssignals 42 ausgebildet ist. Die Sende- und Empfangseinheit 52 wird von einer Batterie 54 mit elektrischer Energie versorgt.

In dem Gehäuse 50 ist an einer Wandung ein passiver RFID-Chip 56 angeordnet. Der RFID-Chip 56 kann durch extern erzeugte elektromagnetische Felder aktiviert werden. Bei Aktivierung des RFID-Chips 56 kann der RFID-Chip 56 eine Kennung aussenden, die z.B. von einem (nicht gezeigten) RFID-Leser empfangen wird.

### Bezuqszeichenliste

- 10: System
- 12: Funkeinrichtung
- 14: Kameraeinheit
- 16: erste Kamera
- 18: zweite Kamera
- 20: Parkplatzfläche
- 22: erster Parkplatzbereich
- 24: zweiter Parkplatzbereich
- 26: dritter Parkplatzbereich
- 28: erste Datenverbindung
- 30: zweite Datenverbindung
- 32: Registrierungsserver
- 34: Datenbank
- 36: erstes Fahrzeug
- 38: Anfragesignal
- 40: Transponder
- 42: Erkennungssignal
- 44: zweites Fahrzeug
- 46: Straße
- 48: drittes Fahrzeug
- 50: Gehäuse
- 52: Sende- und Empfangseinheit
- 54: Batterie
- 56: RFID-Chip

## Patentansprüche

1. Verfahren zur Erfassung von geparkten Fahrzeugen (36, 44, 48) und zur Abrechnung von Parkgebühren, wobei
- Parkplatzbereiche (22, 24, 26) in einer Parkplatzfläche (20) erkannt und/oder festgelegt werden,
- in einem Fahrzeug (36, 44, 48) ein Transponder (40) angeordnet wird,
- der Transponder (40) automatisch wiederholt ein Erkennungssignal (42) aussendet,
- das Erkennungssignal (42) von zumindest drei ortsfest beabstandet zueinander angeordneten Funkeinrichtungen (12) empfangen wird,
- mittels einer Steuereinrichtung anhand des Erkennungssignals (42) eine Position des Fahrzeugs (36, 44, 48) berechnet und eine Identifikation des Transponders (40) ermittelt wird,
- mittels eines Überwachungssystems (14) die Parkplatzfläche (20) zumindest bereichsweise erfasst wird, wobei mittels einer Erkennungseinheit freie und besetzte Parkplatzbereiche (22, 24, 26) erkannt werden,
- festgestellt wird, ob sich das Fahrzeug (36, 44, 48) in einem der Parkplatzbereiche (22, 24, 26) befindet,
- anhand des Erkennungssignals (42) ermittelt wird, ob das Fahrzeug (36, 44, 48) parkt,
- sofern das Fahrzeug (36, 44, 48) in einem der Parkplatzbereiche (22, 24, 26) parkt,
- anhand des Überwachungssystems (14) überprüft wird, ob ein mittels des Erkennungssignals (42) als parkend identifiziertes Fahrzeug (36, 44, 48) tatsächlich auf dem ermittelten Parkplatzbereich (22, 24, 26) parkt, wobei die Identifikation des Transponders (40) und der von dem Fahrzeug (36, 44, 48) verwendete Parkplatzbereich (22, 24, 26) nur im Fall einer korrekten Ermittlung des parkenden Fahrzeugs (36, 44, 48) an einen Registrierungsserver (32) übermittelt werden
- der Registrierungsserver (32) anhand eines Tarifs für den verwendeten Parkplatzbereich (22, 24, 26) eine Parkgebühr ermittelt und
- der Registrierungsserver (32), falls erforderlich, einen Bezahlvorgang einleitet.

2. Verfahren nach Anspruch 1,
**dadurch gekennzeichnet, dass**
ein Stillstand des Fahrzeugs (36, 44, 48), welcher länger als eine vorbestimmte Zeitdauer andauert, als Parken des Fahrzeugs (36, 44, 48) registriert wird.

3. Verfahren nach Anspruch 1 und 2,
**dadurch gekennzeichnet, dass**
der Transponder (40) das Erkennungssignal (42) verschlüsselt aussendet, wobei das Erkennungssignal (42) insbesondere mittels eines asymmetrischen Verschlüsselungsverfahrens erzeugt wird.

4. Verfahren nach zumindest einem der vorstehenden Ansprüche,
**dadurch gekennzeichnet, dass**
ein Hinweissignal ausgegeben wird, sofern ein Fahrzeug (36, 44, 48) außerhalb der Parkplatzbereiche (22, 24, 26) parkt.

5. Verfahren nach zumindest einem der vorstehenden Ansprüche,
**dadurch gekennzeichnet, dass**
eine Auswertung der besetzten und freien Parkplatzbereiche (22, 24, 26) vorgenommen wird und Daten der freien Parkplatzbereiche (22, 24, 26) einem Parkleitsystem zugeführt werden.

6. Verfahren nach zumindest einem der vorstehenden Ansprüche,
**dadurch gekennzeichnet, dass**
mittels des Überwachungssystems (14) die Parkplatzfläche (20) zumindest bereichsweise optisch, mittels Ultraschall, mittels Radar und/oder mittels Bodensensoren, erfasst wird und/oder mittels der Erkennungseinheit freie und besetzte Parkplatzbereiche (22, 24, 26) mittels Bildverarbeitung, bevorzugt anhand von Einzelbildern, erkannt werden.

7. Verfahren nach zumindest einem der vorstehenden Ansprüche,
**dadurch gekennzeichnet, dass**
ein Benachrichtigungssignal ausgegeben wird, sofern von dem Überwachungssystem (14) ein Fahrzeug (36, 44, 48) auf einem Parkplatzbereich (22, 24, 26) detektiert wird, wobei die Position oder Anwesenheit des Fahrzeugs (36, 44, 48) nicht mittels eines Erkennungssignals (42) festgestellt wurde,

8. System (10), umfassend
zumindest einen Transponder (40),
zumindest drei ortsfest beabstandet zueinander angeordnete Funkeinrichtungen (12),
eine Steuereinrichtung,
einen Registrierungsserver (32), welcher mittels einer Datenverbindung (30) mit der Steuereinrichtung verbunden ist und
ein Überwachungssystem (14) zur zumindest bereichsweisen Erfassung der Parkplatzfläche (20), wobei das Überwachungssystem (14) eine Erkennungseinheit umfasst, die ausgebildet ist, freie und besetzte Parkplatzbereiche (22, 24, 26) zu erkennen,
**dadurch gekennzeichnet, dass** das System (10) zur Durchführung des Verfahrens nach einem der vorstehenden Ansprüche ausgebildet ist.

9. System (10) nach Anspruch 8,
**dadurch gekennzeichnet, dass**
die Funkeinrichtungen (12) in oder an Straßenleuchten, Fassaden, Straßenschildern und/oder Ampeln angebracht sind.

10. System (10) nach Anspruch 8 oder 9,
**gekennzeichnet durch**
einen passiven RFID-Chip (56), welcher an oder in dem Transponder (40) angeordnet ist.

11. System (10) nach einem der Ansprüche 8 bis 10,
**dadurch gekennzeichnet, dass**
der Transponder (40) eine Solarzelle umfasst, welche den Transponder (40) mit Energie versorgt, wobei der Transponder (40) zur Befestigung an einer Windschutzscheibe eines Fahrzeugs (36, 44, 48) ausgebildet ist und/oder
der Transponder (40) und die Funkeinrichtungen (12) für eine Funkkommunikation im Frequenzbereich von 2,4 GHz ausgebildet sind und insbesondere WLAN, Bluetooth und/oder ZigBee verwenden.

12. System (10) nach einem der Ansprüche 8 bis 11,
**dadurch gekennzeichnet, dass**
die Erkennungssignale (42) "Chirp"-Impulse mit veränderlicher Frequenz sind, wobei während eines Impulses die Sendefrequenz von einer Startfrequenz bis zu einer Endfrequenz verändert wird.

13. System (10) nach einem der Ansprüche 8 bis 12,
**gekennzeichnet durch**
ein Mobilgerät, welches ausgebildet ist, Erkennungssignale (42) des Transponders (40) zu empfangen, eine Identifikation des Transponders (40) an den Registrierungsserver (32) zu übertragen und von dem Registrierungsserver (32) Informationen über ein dem Transponder (40) zugeordnetes Fahrzeug (36, 44, 48) zu empfangen.

14. System (10) nach einem der Ansprüche 8 bis 13,
**dadurch gekennzeichnet dass**
das Überwachungssystem (14) zur optischen, zumindest bereichsweisen Erfassung der Parkplatzfläche (20) ausgebildet ist, wobei das Überwachungssystem (14) ein Kamerasystem umfasst und/oder die Erkennungseinheit ausgebildet ist, freie und besetzte Parkplatzbereiche (22, 24, 26) mittels Bildverarbeitung, bevorzugt anhand von Einzelbildern, zu erkennen.

15. System (10) nach Anspruch 14,
**dadurch gekennzeichnet, dass**
die Erkennungseinheit die Steuereinrichtung umfasst.

## Claims

1. A method for detecting parked vehicles (36, 44, 48) and for billing parking charges, wherein
- parking bays (22, 24, 26) are recognised and/or determined in a parking area (20);
- a transponder (40) is arranged in a vehicle (36, 44, 48);
- the transponder (40) automatically and repeatedly emits an identification signal (42);
- the identification signal (42) is received by at least three radio devices (12) placed stationary at a distance to one another;
- a position of the vehicle (36, 44, 48) is calculated based on the identification signal (42) and an identification of the transponder (40) is determined using a control device;
- the parking area (20) is recorded at least partially by means of a monitoring system (14), wherein vacant and occupied parking bays (22, 24, 26) are identified by means of a detection unit;
- it is determined whether the vehicle (36, 44, 48) is situated in one of the parking bays (22, 24, 26);
- the identification signal (42) is used to determine whether the vehicle (36, 44, 48) is parked;
- if the vehicle (36, 44, 48) is parked in one of the parking bays (22, 24, 26),
- on the basis of the monitoring system (14), a check is performed as to whether a vehicle (36, 44, 48) identified as being parked by means of the identification signal (42) is actually parked in the parking bay (22, 24, 26) that was determined, wherein the identification of the transponder (40) and of the parking bay (22, 24, 26) used by the vehicle (36, 44, 48) are only transmitted to a registration server (32) if the parked vehicle (36, 44, 48) was correctly determined;
- the registration server (32) calculates a parking charge on the basis of a tariff for the parking bay (22, 24, 26) used; and
- if necessary, the registration server (32) initiates a payment procedure.

2. A method in accordance with claim 1,
**characterised in that**
the vehicle (36, 44, 48) that is stationary for longer than a predetermined period of time is registered as the vehicle (36, 44, 48) that is parked.

3. A method in accordance with claim 1 and claim 2,
**characterised in that**
the transponder (40) emits the identification signal (42) in an encrypted form, wherein the identification signal (42) is in particular generated by means of an asymmetrical encryption process.

4. A method in accordance with at least one of the preceding claims,
**characterised in that**
an alert signal is output if a vehicle (36, 44, 48) is parked outside of the parking bays (22, 24, 26).

5. A method in accordance with at least one of the preceding claims,
**characterised in that**
an analysis of the occupied and vacant parking bays (22, 24, 26) is performed and data relating to the vacant parking bays (22, 24, 26) is transferred to a parking guidance system.

6. A method in accordance with at least one of the preceding claims,
**characterised in that**,
by means of the monitoring system (14), the parking area (20) is visually recorded at least partially, by means of ultrasound, by means of radar and/or by means of in-ground sensors, and/or a detection unit identifies vacant and occupied parking bays (22, 24, 26) by means of image processing, preferably on the basis of individual images.

7. A method in accordance with at least one of the preceding claims,
**characterised in that**
a notification signal is output if the monitoring system (14) detects a vehicle (36, 44, 48) in a parking bay (22, 24, 26), wherein the position or presence of the vehicle (36, 44, 48) was not detected by means of an identification signal (42).

8. A system (10) comprising
at least one transponder (40);
at least three radio devices (12) placed stationary at a distance to one another;
a control device;
a registration server (32) connected to the control device by means of a data link (30); and
a monitoring system (14) for recording at least parts of the parking area (20), wherein the monitoring system (14) comprises a detection unit that is designed to detect vacant and occupied parking bays (22, 24, 26), **characterised in that**
the system (10) is adapted to execute the method in accordance with any one of the preceding claims.

9. A system (10) in accordance with claim 8,
**characterised in that**
the radio devices (12) are mounted in or at streetlamps, facades, road signs and/or traffic lights.

10. A system (10) in accordance with claim 8 or claim 9,
**characterised by**
a passive RFID chip (56) that is arranged at or in the transponder (40).

11. A system (10) in accordance with any one of the claims 8 to 10,
**characterised in that**
the transponder (40) includes a solar cell that supplies the transponder (40) with energy, wherein the transponder (40) is adapted for attachment to the windscreen of a vehicle (36, 44, 48);
and/or
the transponder (40) and the radio devices (12) are adapted for radio communication in the frequency range of 2.4 GHz and in particular use WLAN, Bluetooth and/or ZigBee.

12. A system (10) in accordance with any one of the claims 8 to 11,
**characterised in that**
the identification signals (42) are chirp pulses having a changeable frequency, with the transmission frequency being changed from a start frequency to an end frequency during a pulse.

13. A system (10) in accordance with any one of the claims 8 to 12,
**characterised by**
a mobile device that is adapted to receive identification signals (42) from the transponder (40), to transmit an identification of the transponder (40) to the registration server (32) and to receive information from the registration server (32) concerning a vehicle (36, 44, 48) assigned to the transponder (40).

14. A system (10) in accordance with any one of the claims 8 to 13,
**characterised in that**
the monitoring system (14) is designed for visual recording of at least parts of the parking area (20), wherein the monitoring system (14) comprises a camera system and/or the detection unit is designed to detect vacant and occupied parking bays (22, 24, 26) by means of image processing, preferably on the basis of individual images.

15. A system (10) in accordance with claim 14,
**characterised in that**
the detection unit includes the control device.

## Revendications

1. Procédé de détection de véhicules garés (36, 44, 48) et de facturation de frais de stationnement, dans lequel
- des zones de parking (22, 24, 26) sont reconnues et/ou fixées dans une aire de stationnement (20),
- un transpondeur (40) est disposé dans un véhicule (36, 44, 48),
- le transpondeur (40) émet automatiquement à répétition un signal de reconnaissance (42),
- le signal de reconnaissance (42) est reçu par au moins trois dispositifs radio (12) disposés à distance fixe les uns des autres,
- une position du véhicule (36, 44, 48) est calculée au moyen d'un dispositif de commande sur la base du signal de reconnaissance (42), et une identification du transpondeur (40) est déterminée,
- l'aire de stationnement (20) est détectée au moins localement au moyen d'un système de surveillance (14), des zones de parking (22, 24, 26) libres et occupées étant reconnues au moyen d'une unité de reconnaissance,
- il est constaté si le véhicule (36, 44, 48) se trouve dans l'une des zones de parking (22, 24, 26),
- le signal de reconnaissance (42) est utilisé pour déterminer si le véhicule (36, 44, 48) est garé,
- si le véhicule (36, 44, 48) est garé dans l'une des zones de parking (22, 24, 26),
- le système de surveillance (14) est utilisé pour vérifier si un véhicule (36, 44, 48) identifié comme garé au moyen du signal de reconnaissance (42) est garé effectivement sur la zone de parking (22, 24, 26) déterminée, l'identification du transpondeur (40) et de la zone de parking (22, 24, 26) utilisée par le véhicule (36, 44, 48) n'étant transmise à un serveur d'enregistrement (32) que dans le cas d'une détermination correcte du véhicule (36, 44, 48) garé,
- le serveur d'enregistrement (32) détermine des frais de stationnement en se basant sur un tarif de la zone de parking (22, 24, 26) utilisée, et
- le serveur d'enregistrement (32) lance un processus de paiement, si nécessaire.

2. Procédé selon la revendication 1,
**caractérisé en ce que**
un arrêt du véhicule (36, 44, 48) qui dure plus longtemps qu'une durée temporelle prédéterminée est enregistré comme un stationnement du véhicule (36, 44, 48).

3. Procédé selon la revendication 1 ou 2,
**caractérisé en ce que**
le transpondeur (40) émet de façon chiffrée le signal de reconnaissance (42), le signal de reconnaissance (42) étant généré en particulier par une méthode de chiffrage asymétrique.

4. Procédé selon l'une au moins des revendications précédentes,
**caractérisé en ce que**
un signal d'avertissement est émis si un véhicule (36, 44, 48) est garé à l'extérieur des zones de parking (22, 24, 26).

5. Procédé selon l'une au moins des revendications précédentes,
**caractérisé en ce que**
une évaluation des zones de parking (22, 24, 26) occupées et libres est effectuée, et des données des zones de parking (22, 24, 26) libres sont transmises à un système de gestion de parking.

6. Procédé selon l'une au moins des revendications précédentes,
**caractérisé en ce que**
l'aire de stationnement (20) est détectée au moins localement par voie optique, par ultrasons, par radar et/ou par des capteurs au sol au moyen du système de surveillance (14), et/ou des zones de parking (22, 24, 26) libres et occupées sont reconnues au moyen de l'unité de reconnaissance à l'aide d'un traitement d'images, de préférence sur la base d'images individuelles.

7. Procédé selon l'une au moins des revendications précédentes,
**caractérisé en ce que**
un signal de notification est émis si un véhicule (36, 44, 48) sur une zone de parking (22, 24, 26) est détecté par le système de surveillance (14), la position ou la présence du véhicule (36, 44, 48) n'ayant pas été constatée au moyen du signal de reconnaissance (42).

8. Système (10), comportant
au moins un transpondeur (40),
au moins trois dispositifs radio (12) disposés à distance fixe les uns des autres,
un dispositif de commande,
un serveur d'enregistrement (32) qui est connecté au dispositif de commande au moyen d'une connexion de données (30), et
un système de surveillance (14) destiné à la détection au moins locale de l'aire de stationnement (20), le système de surveillance (14) comprenant une unité de reconnaissance réalisée pour reconnaître des zones de parking (22, 24, 26) libres et occupées,
**caractérisé en ce que**
le système (10) est réalisé pour mettre en oeuvre le procédé selon l'une des revendications précédentes.

9. Système (10) selon la revendication 8,
**caractérisé en ce que**
les dispositifs radio (12) sont montés dans ou sur des réverbères, des façades, des panneaux de signalisation et/ou des feux de circulation.

10. Système (10) selon la revendication 8 ou 9,
**caractérisé par**
une puce RFID passive (56) qui est disposée sur ou dans le transpondeur (40).

11. Système (10) selon l'une des revendications 8 à 10,
**caractérisé en ce que**
le transpondeur (40) comprend une cellule solaire qui alimente le transpondeur (40) en énergie, le transpondeur (40) étant conçu pour être fixé à un pare-brise d'un véhicule (36, 44, 48), et/ou
le transpondeur (40) et les dispositifs radio (12) sont conçus pour une communication radio dans la gamme de fréquences de 2,4 GHz et utilisent en particulier WLAN, Bluetooth et/ou ZigBee.

12. Système (10) selon l'une des revendications 8 à 11,
**caractérisé en ce que**
les signaux de reconnaissance (42) sont des impulsions "chirp" à fréquence variable, et pendant une impulsion, la fréquence d'émission est modifiée depuis une fréquence de début jusqu'à une fréquence de fin.

13. Système (10) selon l'une des revendications 8 à 12,
**caractérisé par**
un appareil mobile qui est conçu pour recevoir des signaux de reconnaissance (42) du transpondeur (40), pour transmettre une identification du transpondeur (40) au serveur d'enregistrement (32) et pour recevoir en provenance du serveur d'enregistrement (40) des informations relatives à un véhicule (36, 44, 48) associé au transpondeur (40).

14. Système (10) selon l'une des revendications 8 à 13,
**caractérisé en ce que**
le système de surveillance (14) est conçu pour la détection optique, au moins locale, de l'aire de stationnement (20), le système de surveillance (14) comprenant un système de caméra, et/ou l'unité de reconnaissance étant conçue pour reconnaître des zones de parking (22, 24, 26) libres et occupées au moyen d'un traitement d'images, de préférence sur la base d'images individuelles.

15. Système (10) selon la revendication 14,
**caractérisé en ce que**
l'unité de reconnaissance comprend le dispositif de commande.
